(19) Europäisches Patentamt
European Patent Office
Office européen des brevets

(11) **EP 3 176 065 B1**

(12) **EUROPEAN PATENT SPECIFICATION**

(45) Date of publication and mention
of the grant of the patent:
**10.06.2020   Bulletin 2020/24**

(51) Int Cl.:
***B62M 6/45*** *(2010.01)*   ***B62M 6/55*** *(2010.01)*

(21) Application number: **16201343.7**

(22) Date of filing: **30.11.2016**

(54) **ELECTRICALLY ASSISTED BICYCLE**

ELEKTRISCH UNTERSTÜTZTES FAHRRAD

BICYCLETTE AVEC ASSISTANCE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2015   JP 2015234609**

(43) Date of publication of application:
**07.06.2017   Bulletin 2017/23**

(73) Proprietor: **Yamaha Hatsudoki Kabushiki Kaisha
Iwata-shi, Shizuoka 438-8501 (JP)**

(72) Inventor: **NEGORO, Masanori
Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 1 612 084       EP-A1- 2 604 499
EP-A1- 2 657 118       JP-A- 2001 080 569
JP-A- 2015 209 200**

**Description**

The present invention relates to an electrically assisted bicycle according to the preamble of independent claim 1 and a method for controlling an electrically assisted bicycle according to the preamble of independent claim 6. Such an electrically assisted bicycle and such a method for controlling an electrically assisted bicycle can be taken from the prior art document EP 2 657 118 A1, which discloses the features of the preamble of claim 1. Said Prior art document discloses a motor driving control apparatus that provides specific calculation in order to provide assisting torque by means of the electric motor in consideration of variation of pedal torque applied by the rider and it is suggested to change such calculation in view of specific requirements, i.e. driving conditions. In particular, this motor driving control apparatus includes a smoothing processing unit that executes smoothing processing using values of pedal input torque at plural points to calculate a first smoothed torque value; an insufficiency output unit that obtains a rate of points at which input of the pedal input torque is insufficient among the plural points; an assist torque calculating unit that performs calculation processing of mixing the first torque value calculated by the smoothing processing unit and the pedal input torque in accordance with output of the insufficient output unit to calculate assist torque; and a driving processing unit that performs processing to drive a motor using the assist torque calculated by the assist torque calculating unit. The teaching of said prior art document relates to a technique handling the torque ripple or smoothing. The assist torque is calculated based on the pedal torque and the calculation method is based on one single calculation equation. Further, the assist torque, which is obtained by the specific calculation equation, is corrected by taking into account of the torque ripple. Moreover, the situating of going up the slope is explained in said prior art document.

Electrically assisted bicycles are known from Japanese Patent Unexamined Publication JP-A-2001-122184 and the like in which motor torque can be imparted to assist the pedal torque exerted by a rider.

In an electrically assisted bicycle described in JP-A-2001-122184, a plurality of response speeds are set at which an electric driving force is outputted in response to an application of a man-powered driving force, whereby the riding comfort is enhanced by switching the response speeds by a switch or according to a mean value of pedal torque.

Although electrically assisted bicycles are known in which the riding comfort is enhanced as in the electrically assisted bicycle described in JP-A-2001-122184 above, wider output characteristics of an electric motor are desired depending upon situations or preferences of riders.

Then, an object of the invention is to provide an electrically assisted bicycle including an electric motor and a method for controlling an electrically assisted bicycle having a wide range of output characteristics.

According to the present invention said object is solved by an electrically assisted bicycle having the features of independent claim 1. Moreover, said object is solved by a method for controlling an electrically assisted bicycle having the features of independent claim 6. Preferred embodiments are laid down in the dependent claims.

An electrically assisted bicycle according to the present teaching has:

a crank shaft;
pedals which rotate the crank shaft;
an electric motor which assists force with which a rider depresses the pedals;
a torque sensor which outputs a signal corresponding to pedal torque exerted on the pedals by the rider;
a control unit which is adapted to calculate a command value which determines on the magnitude of assisting torque based on at least an output of the torque sensor; and
an operating unit which is adapted to be operated by the rider, wherein
the control unit is configured so as to do, in response to an operation of the operating unit by the rider, the switching between:
a first control; and
a second control in which a time required for the assisting torque to change to meet a change in the pedal torque is shorter and the amount of change in the assisting torque to meet a change in the pedal torque is greater than in the first control.

According to the electrically assisted bicycle configured in the way described above, the assisting torque is outputted from the electric motor by the first control and the second control in which the rider feels a different assisting sensation from that the rider feels in the first control.

The second control causes to change the assisting torque more quickly to meet a change in the pedal torque than the first control, and the second control changes the assisting torque more greatly to meet a change in the pedal torque than the first control. Owing to this, for example, when the user selects the second control at the start of propelling the bicycle, the assisting torque can be obtained as soon as the pedal torque is inputted, and the strong assisting torque can be obtained in response to the inputted pedal torque.

Moreover, the time required for the assisting torque to change to meet a change in the pedal torque is longer in the first control than in the second control, and the amount of change in the assisting torque to meet a change in the pedal torque is smaller in the first control than in the second control. Consequently, since it is difficult for the assisting torque to change even though the pedal torque changes, for example, when the user selects the first control while propelling the bicycle at cruising speeds, the user can feel a comfortable assisting sensation.

In this way, since the range of output characteristics of the electric motor is wide, the convenience of the user is enhanced.

In the electrically assisted bicycle of the present teaching, assuming that: P(t) is pedal torque at the current time PA1(t) is an average value of pedal torque during a span (t-t1), PA2(t) is an average value during a span (t-2, $|t-t2| \leq |t-t1|$), a, b, e, f, A1 and A2 ($a/b < e/f$) are constants, and
$\alpha$ and $\beta$ are variables ($0 \leq \alpha \leq 1$, $0 \leq \beta \leq 1$, $\alpha < \beta$),
the control unit may calculate a command value T1 which is calculated by the first control using the following expression (1), and may calculate a command value T2 which is calculated by the second control using the following expression (2).

$$T1(t) = \{a^*P(t)^*\alpha + b^*PA1(t)^*(1-\alpha)\}^*A1 \dots (1)$$

$$T2(t) = \{e^*P(t)^*\beta + f^*PA2(t)^*(1-\beta)\}^*A2 \dots (2)$$

In the electrically assisted bicycle of the present teaching, assuming that: P(t) is pedal torque at the current time t, QA1(t) is an average value of pedal torque during the past 1/g rotation of the crank shaft at the current time t, QA2(t) is an average value of pedal torque during the past 1/h ($g \leq H$) rotation of the crank shaft, a, b, e, f, A1 and A2 ($a/b < e/f$) are constants, and
$\alpha$ and $\beta$ are variables ($0 \leq \alpha \leq 1$, $0 \leq \beta \leq 1$, $\alpha < \beta$),
the control unit may calculate a command value T1 which is calculated by the first control using the following expression (3), and may calculate a command value T2 which is calculated by the second control using the following expression (4).

$$T1(t) = \{a^*P(t)^*\alpha + b^*QA1(t)^*(1-\alpha)\}^*A1 \dots (3)$$

$$T2(t) = \{e^*P(t)^*\beta + f^*QA2(t)^*(1-\beta)\}^*A2 \dots (4)$$

In the electrically assisted bicycle of the present teaching, the control unit may set $\alpha$ and $\beta$ based on a crank speed c calculated from a change in pedal torque or a crank speed c calculated from an output of the crank rotation detection unit in such a way that $\alpha$ and $\beta$ become greater as the crank speed c becomes slower and $\alpha$ and $\beta$ become smaller as the crank speed c becomes faster.

In the electrically assisted bicycle of the present teaching, the bicycle has a wheel speed sensor which outputs a signal corresponding to a wheel speed of the wheel, and the control unit may set $\alpha$ and $\beta$ based on a wheel speed v calculated from an output of the wheel speed sensor in such a way that $\alpha$ and $\beta$ become greater as the wheel speed v becomes slower and $\alpha$ and $\beta$ become smaller as the wheel speed v becomes faster.

In the electrically assisted bicycle of the present teaching, in doing the switching between the first control and the second control while the vehicle is being propelled, in case an amount of change from the current command value to the command value calculated after the switching of the controls exceeds a predetermined upper limit value, the control unit may set the command value at the upper limit value in place of the calculated command value.

According to the electrically assisted bicycle configured as described above, the amount of change in the command value can be suppressed, whereby the switching between the first control and the second control can be executed smoothly.

In the electrically assisted bicycle of the present teaching, the bicycle includes an indicator which is illuminated in different colors or different patterns in association with the control unit executing the first control or the second control.

According to the electrically assisted bicycle configured as described above, by looking at the indicator, the user can verify easily which of the first control and the second control is currently in execution. The different patterns include turning on, turning off and flashing of the indicator.

[Advantage of the Invention]

According to the invention, it is possible to provide the electrically assisted bicycle including the electric motor having the wider range of output characteristics.

[Brief Description of Drawings]

Fig. 1 is a side view of an electrically assisted bicycle according to a preferred embodiment.
Fig. 2 is a block diagram showing the function of the electrically assisted bicycle according to the embodiment.
Fig. 3 is a flowchart showing a control switching operation by operating an operating unit of the electrically assisted bicycle according to the embodiment.
Fig. 4 is a schematic diagram illustrating a control switching operation by a motor control module.

[Mode for Carrying out the Invention]

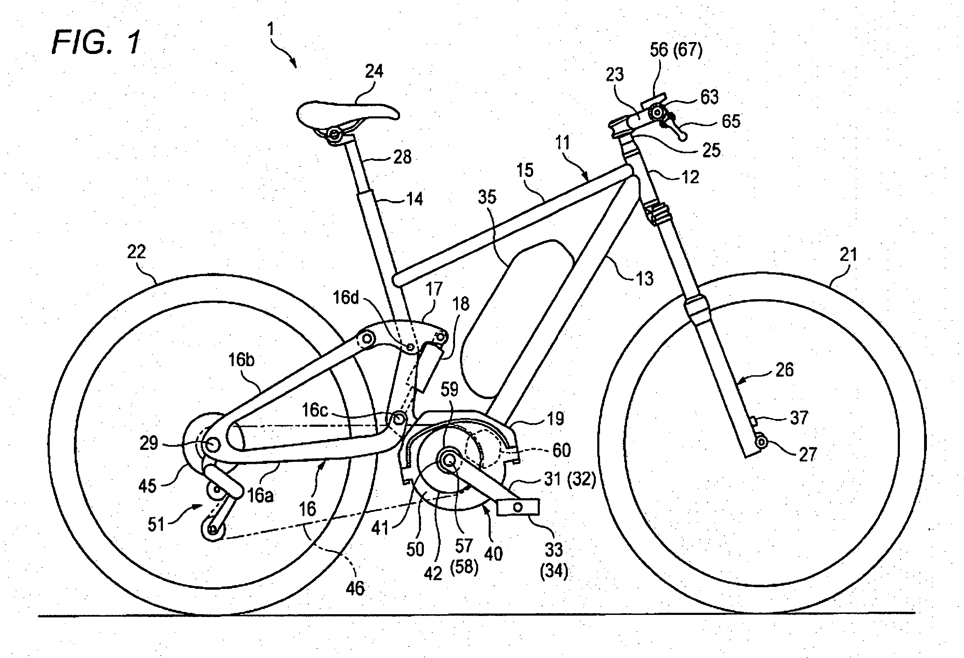

Hereinafter, referring to Fig. 1, a preferred embodiment will be described. Dimensions of constituent elements in Fig. 1 do not always represent truly actual dimensions of the constituent elements and dimensional ratios of the constituent elements.

In the following description, front, rear, left and right mean front, rear, left and right as viewed from a rider who is seated on a seat 24 of an electrically assisted bicycle while gripping on handgrips of a handlebar 23.

<Overall Configuration of Electrically Assisted Bicycle>

As shown in Fig. 1, an electrically assisted bicycle 1 has pedals 33, 34 and an electric motor 60. This electrically assisted bicycle 1 is driven by a total of drive torque of a pedal torque generated by a rider depressing the pedals 33, 34 and a motor torque outputted from the electric motor 60. The motor torque of the electric motor 60 constitutes assist torque which assists the rider in depressing the pedals 33, 34. Additionally, in this electrically assisted bicycle 1, the electric motor 60 can impart assisting torque to a rear wheel 22 which assists the rider in pushing the bicycle while walking with the handlebar 23 gripped on by the rider or walk-push assisting torque.

The electrically assisted bicycle 1 has a body frame 11 which extends in a front-to-rear direction. The electrically assisted bicycle 1 also has a front wheel 21, the rear wheel 22, a handlebar 23, a seat 24 and a power unit 40.

The body frame 11 has a head tube 12, a down tube 13, a top tube 15, a seat tube 14 and a swing arm 16 which is suspended on the seat tube 14 so as to swing freely in an up-to-down direction. The head tube 12 is disposed at a front portion of the electrically assisted bicycle 1. A front portion of the down tube 13 which extends obliquely downwards to the rear and a front portion of the top tube 15 are connected to the head tube 12. A lower end portion of the seat tube 14 and a rear portion of the down tube 13 are connected to a bracket 19 which extends in a front-to-rear direction of a vehicle body. The seat tube 14 extends obliquely upwards to the rear from a rear end portion of the bracket 19.

A handlebar stem 25 is inserted into the head tube 12 so as to turn freely. The handlebar 23 is fixed to an upper end portion of the handlebar stem 25. A front fork 26 with a hydraulic shock absorber is fixed to a lower end portion of the handlebar stem 25. The front wheel 21 is supported rotatably at a lower end portion of the front fork 26 by an axle shaft 27. A front wheel speed sensor 37 is provided at the lower end portion of the front fork 26 to detect a vehicle speed from rotations of the front wheel 21.

A seat post 28 is inserted into the cylindrical seat tube 14. The seat 24 is provided at an upper end portion of the seat post 28.

The swing arm 16 is such that a pair of chain stays 16a and a pair of seat stays 16b is integrated into one unit. The pair of chain stays 16a is supported on the seat tube 14 at front ends thereof via a first pivot 16c so as to swing freely and is provided so as to hold the rear wheel 22 therebetween from left- and right-hand sides of the rear wheel 22. The pair of chain stays 16a extends from the first pivot 16c towards a rotational center of the rear wheel 22. A link 17 is supported at a middle portion of the seat tube 14 so as to swing in the up-to-down direction about a second pivot 16d. The pair of seat stays 16b is connected to the seat tube 14 at front ends thereof via the link 17, and rear ends thereof extend towards the rotational center of the rear wheel 22. A hydraulic shock absorber 18 is disposed between the other end of the link 17 and the seat tube 14. The rear wheel 22 is supported rotatably at rear end portions of the chain stays 16a and the seat stays 16b.

A battery 35 is disposed on the down tube 13, and this battery 35 supplies electric power to the electric motor 60 of the power unit 40. The battery 35 has a chargeable-dischargeable rechargeable battery and a battery control unit, which are not shown. The battery control unit controls the charging and discharging of the rechargeable battery and monitors an output current from the battery and a residual capacity or the state of charge of the rechargeable battery.

The power unit 40 includes a crank shaft 41, a crank rotation input shaft (not shown), a pedal torque detection unit 57, a crank rotation detection unit 58, the electric motor 60 and a speed reduction gear (not shown) and a resultant force output shaft 59, which are incorporated in a unit case 50 as a unit. The power unit 40 is connected to the bracket 19 of the body frame 11 with bolts.

The crank shaft 41 is provided rotatably below the seat tube 14. The crank shaft 41 penetrates the unit case 50 in a left-to-right direction and is supported thereon. Crank arms 31, 32 are attached to both end portions of the crank shaft 41. The pedals 33, 34 are attached individually to distal ends of the crank arms 31, 32 in a rotatable fashion.

The crank rotation input shaft (not shown) has a cylindrical shape and the crank shaft 41 is inserted through an interior thereof. One end of the crank rotation input shaft is spline connected to the crank shaft 41, and the other end thereof is connected to the resultant force output shaft 59 via a man power one-way clutch (not shown).

The pedal torque detection unit 57 (an example of a torque sensor) is disposed on a circumference of the crank rotation input shaft to detect pedal torque inputted into the crank shaft 41 via the pedals 33, 34 by the rider.

The crank rotation detection module 58 detects a rotation at an input side of the crank rotation input shaft or the man power one-way clutch which is connected to the crank rotation input shaft when the rider rotates the pedals 33, 34.

The electric motor 60 is disposed at the front of the crank shaft 41 within the unit case 50. The rotation of the electric motor 60 is transmitted to the resultant force output shaft 59 via the speed reduction gear (not shown) and a motor one-way clutch (not shown).

A drive sprocket 42 is attached to a right end of the cylindrical resultant force output shaft 59 which is concentric with the crankshaft 41. This drive sprocket 42 rotates together with the crank shaft 41. A plurality of driven sprockets 45 providing a corresponding number of gears are provided concentrically with a rear axle shaft 29 of the rear wheel 22. The driven sprockets 45 are connected to the rear wheel 22 via a one-way clutch, not shown.

An endless chain 46 is extended between the drive sprocket 42 and any one of the driven sprockets 45 so as to wrap them around via a rear derailer 51. This allows the drive sprocket 42 to rotate together with the resultant force output shaft 59 when the rider depresses to rotate the pedals 33, 34 with his or her feet. Further, the rotation of the drive sprocket 42 is transmitted to any one of the driven sprockets 45 by way of the chain 46 to thereby drive the rear wheel 22.

The electric motor 60 is disposed at the front of the crank shaft 41 within the unit case 50. Electric power is supplied to the electric motor 60 from the battery 35. When electric power is supplied to the electric motor 60, the electric motor 60 rotates. The rotation of the electric motor 60 is combined with man power on the resultant force output shaft 59 and is then transmitted to the chain 46 via the drive sprocket 42. In this way, when electric power is supplied to the electric motor 60, motor torque is generated in the electric motor 60. This motor torque is transmitted to the rear wheel 22 via the chain 46.

Grip portions 63 are provided at left and right end portions of the handlebar 23. The grip portions 63 extend substantially in the left-to-right direction. The rider can grip on these grip portions 63.

Brake levers 65 are provided near the grip portions 63. When the rider operates the right brake lever 65 with his or her right hand, a braking force is imparted to the front wheel 21. When the rider operates the left brake lever 65 with his or her left hand, a braking force is imparted to the rear wheel 22.

An operating unit 56 is provided near the grip portion 63. The operating unit 56 can be operated by a finger of a hand of the rider by which the rider grips on the grip portion 63. The operating unit 56 is connected to a control apparatus 100 including a motor control module 95, which will be described later, via a signal line (whose illustration is omitted).

In the electrically assisted bicycle 1 configured in the way described above, the electric motor 60 is controlled by the control apparatus 100 to apply motor torque to the rear wheel 22.

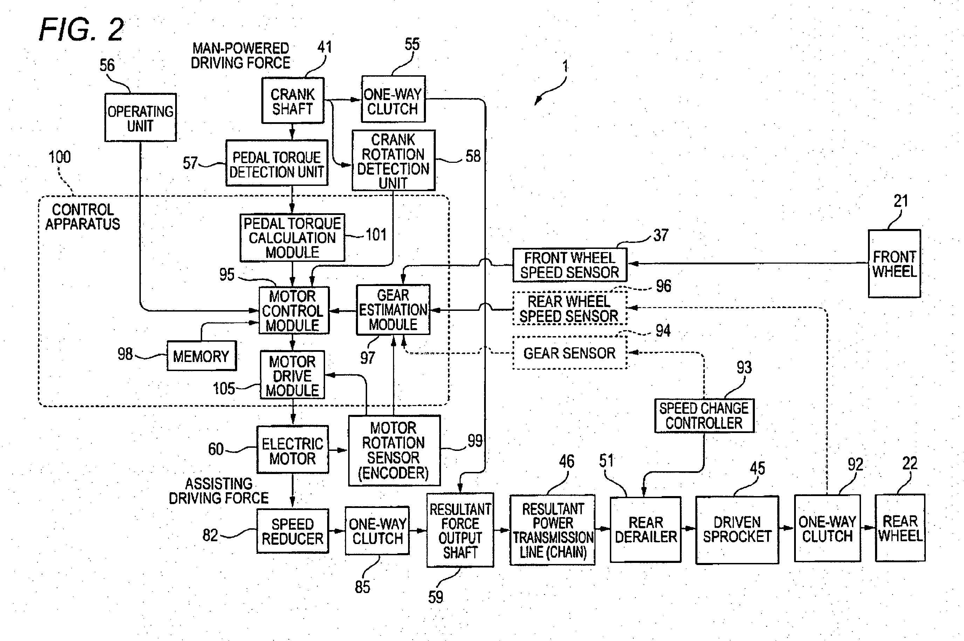

Fig. 2 is a block diagram showing the function of the electrically assisted bicycle 1. As shown in Fig. 2, the control apparatus 100 includes a pedal torque calculation module 101, the motor control module 95, a motor drive module 105, a gear estimation module 97 and a memory 98. The operating unit 56 is connected to the motor control module 95.

<Power Transmission Line>

Next, a power transmission line will be described.

When the rider depresses the pedals 33, 34 to rotate the crank shaft 41, the rotation of the crank shaft 41 is transmitted to the resultant force output shaft 59 by way of a one-way clutch 55. The one-way clutch 55 transmits only a forward rotation of the crank shaft 41 to the resultant force output shaft 59 and does not transmit a reverse rotation of the crank shaft 41 to the resultant force output shaft 59. The rotation of the resultant force output shaft 59 is transmitted to the chain 46.

The rotation of the chain 46 is transmitted to the desired driven sprocket 45 by the rear derailer 51 on the rear wheel 22 side. The rotation of the driven sprockets 45 is transmitted to the rear wheel 22 by way of a one-way clutch 92.

The rear derailer 51 is a mechanism which can shift gears in response to an operation of a speed change controller 93 by the rider. A gear sensor 94 is provided on the speed change controller 93, and the gear sensor 94 transmits the information on the number of gears in the speed change controller 93 to the gear estimation module 97.

The one-way clutch 92 transmits the rotation of the driven sprocket 45 to the rear wheel 22 only when the rotation speed of the driven sprocket 45 is faster than the rotation speed of the rear wheel 22. When the rotation speed of the driven sprocket 45 is slower than the rotation speed of the rear wheel 22, the one-way clutch 92 does not transmit the rotation of the driven sprocket 45 to the rear wheel 22. A rear wheel speed sensor 96 is provided on the one-way clutch 92, and the rear wheel speed sensor 96 transmits the information on the rotation speed of the rear wheel 22 to the gear estimation module 97.

The rotation of the electric motor 60 is transmitted to a one-way clutch 85 via a speed reducer 82. The one-way clutch 85 transmits only a rotation of the electric motor 60 in a direction in which the speed reducer 82 rotates the resultant force output shaft 59 forwards to the resultant force output shaft 59 but does not transmit a rotation of the electric motor 60 in a direction in which the seed reducer 82 rotates the resultant force output shaft 59 reversely to the resultant force output shaft 59.

In this way, in the electrically assisted bicycle 1 according to the embodiment, pedal torque inputted into the crank shaft 41 and motor torque generated in the electric motor 60 are combined together at the resultant force output shaft 59 to thereby be transmitted to the chain 46.

<Signal Lines>

Next, signal lines will be described.

When the rider rotates the crank shaft 41, the pedal torque detection unit 57 which is provided on the vehicle generates a signal corresponding to the pedal torque inputted into the crank shaft 41. The pedal torque detection unit 57 inputs the signal into the pedal torque calculation module 101.

The pedal torque calculation module 101 converts the signal from the pedal torque detection unit 57 into the pedal torque exerted on the pedals 33, 34 by the rider. The pedal torque calculation module 101 inputs the value of the pedal toque into the motor control module 95.

The crank rotation detection unit 58 is a sensor for detecting the phase of the crank shaft 41. The crank rotation detection unit 58 generates a signal corresponding to the phase of the crank shaft 41. The crank rotation detection unit 58 inputs the signal into the motor control module 95.

The front wheel speed sensor 37 transmits a signal of the rotation speed of the front wheel 21 to the gear estimation module 97. The gear estimation module 97 estimates a selected gear from the rotation speed of the front wheel 21 and transmits the information thereon to the motor control module 95.

A motor rotation sensor 99 is provided on the electric motor 60. This motor rotation sensor 99 detects a revolution speed of the electric motor 60 and transmits the revolution speed so detected to the gear estimation module 97 and the motor drive module 105.

<Propulsion Assist>

The motor control module 95 calculates a command value for imparting an appropriate assisting force from outputs from the pedal torque calculation module 101, the crank rotation detection unit 58 and the gear estimation module 97 and output from information stored in the memory 98 and transmits the command value so calculated to the motor drive module 105.

The motor drive module 105 supplies electric power corresponding to the command value to the electric motor 60 from the battery 35 based on the command value from the motor control module 95. Then, the electric motor 60 to which the electric power is so supplied drives to generate predetermined motor torque.

In this way, the motor control module 95 can cause the electric motor 60 to generate the motor torque so as to assist the rider in depressing the pedals 33, 34 when propelling the vehicle.

In the electrically assisted bicycle 1 configured in the way described heretofore, the motor control module 95 determines on a command value based on a first control or a second control. In the second control, compared with the first control, a time required for change in assisting torque is shorter than a time required for change in pedal torque, and an amount of change in assisting torque is greater than an amount of change in pedal torque.

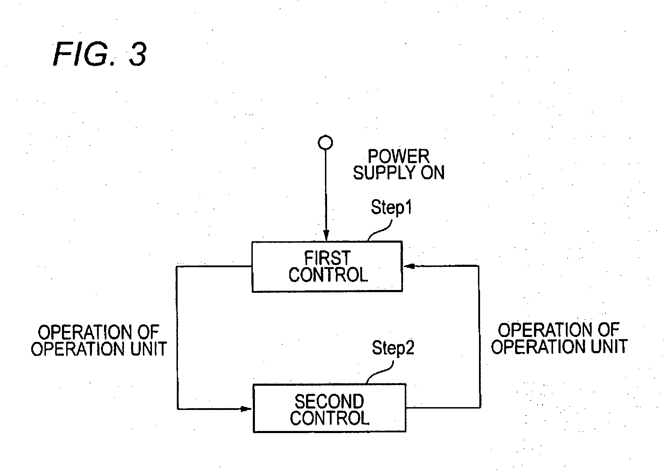

Fig. 3 is a flowchart showing a control switching operation by operating the operating unit 56 of the electrically assisted bicycle 1 according to the embodiment. As shown in Fig. 3, in the electrically assisted bicycle 1, the first control is selected after a power supply of the vehicle is switched on (step 1). With the first control selected, when the rider operates the operating unit 56, the second control is selected (step 2). With the second control selected, when the rider operates the operating unit 56, the first control is selected (step 1).

Owing to this, for example, in the event that a momentary assist is wanted as when riding over a bump at the start of propelling the bicycle with the first control selected normally, the rider operates the operating unit 56 to select the second control, thereby making it possible to obtain assisting torque which enables the bicycle to start smoothly or ride over the bump.

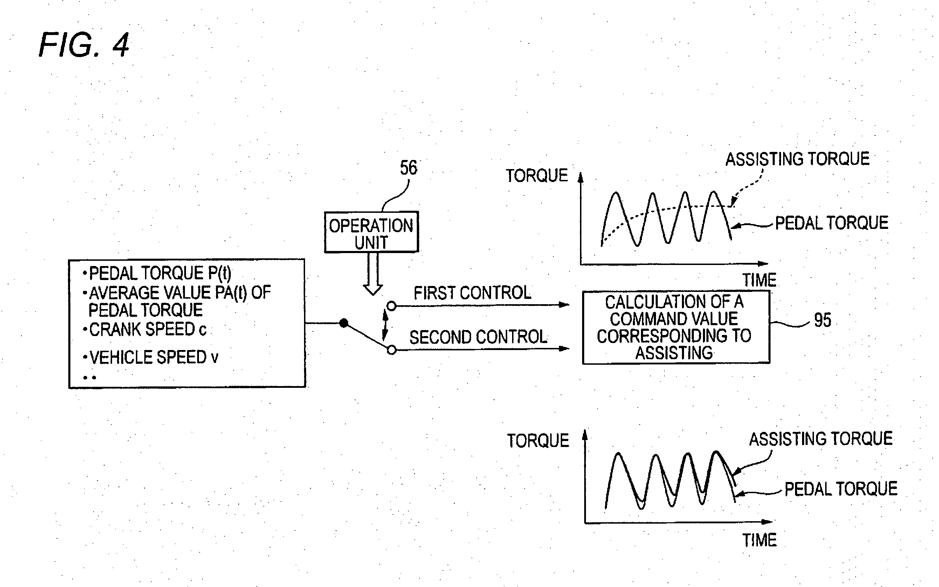

Fig. 4 is a schematic diagram illustrating a control switching operation by the motor control module 95.

As shown in Fig. 4, the motor control module 95 does the switching from the first control to the second control or from the second control to the first control as a result of the operating unit 56 being operated. The motor control module 95 calculates a command value corresponding to required assisting torque based on a value P(t) of the pedal torque, an average value PA(t) of the pedal torque, a crank speed c, a vehicle speed v and the like.

Next, a calculation example of calculating a command value which is transmitted from the motor control module 95 to the motor drive module 105 in the first control and the second control will be described.

Basically, the motor control module 95 calculates a component of assisting torque which corresponds to pedal torque P(t) at a time t, calculates a component of assisting torque which corresponds to an average value PA1(t) of the pedal torque at the time t and determines on assisting torque T(t) at the time t by totaling both the components of assisting torque.

The motor control module 95 calculates assisting torque according to the first control or the second control which differs from the first control. The motor control module 95 calculates a command value corresponding to the assisting torque and transmits the command value so calculated to the motor drive module 105.

In the first control, assisting torque T1(t) is calculated based on the following expression (1).

$$T1(t) = \{a^*P(t)^*\alpha + b^*PA1(t)^*(1-\alpha)\}^*A1 \dots (1)$$

where, P(t) is pedal torque at the current time t, PA1(t) is an average value of pedal torque during a span (t-t1), a, b and A1 are constants, and $\alpha$ is a variable of $0 \leq \alpha \leq 1$.

In the second control, assisting torque T2(t) is calculated based on the following expression (2).

$$T2(t) = \{e^*P(t)^*\beta + f^*PA2(t)^*(1-\beta)\}^*A2 \dots (2)$$

Where P(t) is pedal torque at the current time t, PA2(t) is an average value of pedal torque during a span (t-t2), in relation to t1, t2, $|t-t2| \leq |t-t1|$, e, f and A2 are constants, (a/b<e/f), $\beta$ is a variable of $0 \leq \beta \leq 1$, and in relation to a, $\beta$, $\alpha < \beta$.

Here, in relation to the average values of the pedal torque, the spans where the average values are obtained differ from each other between the first control and the second control. In the case of |t-t2|<|t-t1|, the time required for the assisting torque to change to meet a change in the pedal torque P(t) tends to be longer with the average value PA1(t) of the pedal torque used in the first control than with the average value PA2(t) of the pedal torque used in the second control.

t1 may be equal to t2 (t1=t2). In this case, |t-t2|=|t-t1|. Since $\alpha < \beta$ and (a/b<e/f), when comparing a ratio k1=(a*P(t)*$\alpha$/{b*PA1(t)*(1-$\alpha$)} of a component of assisting torque calculated based on pedal torque to a component of assisting torque calculated based on the average value of pedal torque in the first control with a ratio k2=(e*P(t)*$\beta$)/{f*PA2(t)*(1-$\beta$)} of a component of assisting torque calculated based on pedal torque to a component of assisting torque calculated based on the average value of pedal torque in the second control, k1<k2.

Namely, compared with the first control, in the second control, the component of assisting torque calculated based on (the momentary value of) the pedal torque P(t) at the time t tends to be greater than the component of assisting torque calculated based on the average values PA1(t), PA2(t) of the pedal torque. Owing to this, even though t1=t2 and PA1(t)=PA2(t), according to the second control, it is easy to make the assisting torque change quickly in response to a change in the pedal torque.

In addition, since k1<k2, when the pedal torque P(t) changes, the amount of change in the pedal torque P(t) becomes greater than the amount of change in the average value of the pedal torque. Owing to this, the amount of change in assisting torque to meet a change in pedal torque becomes greater in the second control than in the first control.

In the example described above, while the command values T1, T2 of assisting torque are described as being calculated based on the temporal average value of the pedal torque, the present teaching is not limited thereto. For example, as will be described next by using expressions (3), (4), command values T1, T2 of assisting torque may be calculated based on an average value of pedal torque per a predetermined number of rotations of the crank shaft 41.

In the first control, assisting torque T1(t) is calculated based on the following expression (3).

$$T1(t) = \{a^*P(t)^*\alpha + b^*QA1(t)^*(1-\alpha)\}^*A1 \dots (3)$$

Where, P(t) is pedal torque at the current time t, QA1(t) is an average value of pedal torque during the past 1/g rotation of the crank shaft 41 at the current time t, a, b and A1 are constants, and a is a variable of $0 \leq \alpha \leq 1$.

In the second control, assisting torque T2(t) is calculated based on the following expression (4).

$$T2(t) = \{e^*P(t)^*\beta + f^*QA2(t)^*(1-\beta)\}^*A2 \ldots (4)$$

Where P(t) is pedal torque at the current time t, QA2(t) is an average value of pedal torque during the past 1/h (gsh) rotation of the crank shaft 41 at the current time t, e, f and A2 are constants, (a/b<e/f), $\beta$ is a variable of $0 \leq \beta \leq 1$, and in relation to $\alpha$, $\beta$, $\alpha < \beta$.

For example, in the first control, with g set at 1 or g=1, assisting torque T1(t) may be calculated from an average value of pedal torque during one rotation of the crank shaft 41, while in the second control, with h set at 2 (h=2), assisting torque T2(t) may be calculated from an average value of pedal torque during a half rotation of the crank shaft 41.

In this case, too, the time required for assisting torque to change to meet a change in pedal torque is shorter in the second control than in the first control. Additionally, the amount of change in assisting torque to meet a change in pedal torque becomes greater in the second control than in the first control.

In the expressions (1) to (4) described above, $\alpha$ and $\beta$ can be set as follows.

The motor control module 95 may set $\alpha$ and $\beta$ based on a crank speed c calculated from a change in pedal torque or a crank speed c calculated from an output of the crank rotation detection unit 58 in such a way that $\alpha$ and $\beta$ become greater as the crank speed c becomes slower and $\alpha$ and $\beta$ become smaller as the crank speed c becomes faster.

Alternatively, the motor control module 95 may set $\alpha$ and $\beta$ based on a wheel speed v calculated from an output of a wheel speed sensor such as the front wheel speed sensor 37 or the rear wheel speed sensor 96 in such a way that $\alpha$ and $\beta$ become greater as the wheel speed v becomes slower and $\alpha$ and $\beta$ become smaller as the wheel speed v becomes faster.

Further, the motor control module 95 may set $\alpha$ and $\beta$ based on the crank speed c and the wheel speed v in such a way that $\alpha$ and $\beta$ become greater as the crank speed c becomes slower, a and $\beta$ become smaller as the crank speed c becomes faster, $\alpha$ and $\beta$ become greater as the wheel speed v becomes slower and $\alpha$ and $\beta$ become smaller as the wheel speed v becomes faster.

In this way, by setting $\alpha$ and $\beta$ so as to become greater or smaller according to either of the crank speed c and the wheel speed v or both of the crank speed c and the wheel speed v, strong assisting torque can be obtained quickly at the start of propelling the bicycle or smooth assisting torque can be obtained while propelling the bicycle at a cruising speed, thus making it possible to obtain assisting torque suitable for situations.

The constants a, b, e, f, A1 and A2 are preset values which are recorded in the memory 98, for example. Alternatively, the constants a, b, e, f, A1 and A2 may be such as to be changed by the user. a and e may be equal to or different from each other. b and f may be equal to or different from each other. A1 and A2 may be equal to or different from each other.

According to the embodiment, the assisting torque is outputted from the electric motor 60 by the first control and the second control under which the rider feels a different assisting sensation from that the rider feel under the first control.

The second control causes to change the assisting torque more quickly to meet a change in the pedal torque than the first control, and the second control changes the assisting torque more greatly to meet a change in the pedal torque than the first control. Owing to this, for example, when the user selects the second control at the start of propelling the bicycle, the assisting torque can be obtained as soon as the pedal torque is inputted, and the strong assisting torque can be obtained in response to the inputted pedal torque.

The time required for the assisting torque to change to meet a change in the pedal torque is longer in the first control than in the second control, and the amount of change in the assisting torque to meet a change in the pedal torque is smaller in the first control than in the second control. Consequently, since it is difficult for the assisting torque to change even though the pedal torque changes, for example, when the user selects the first control while propelling the bicycle at cruising speeds, the user can feel a comfortable assisting sensation.

In this way, according to the electrically assisted bicycle 1 according to the embodiment, since the range of output characteristics of the electric motor 60 is wide, the convenience of the user is enhanced.

Alternatively, for example, when the user propels the bicycle continuously in the assisted propelling mode on an upward slope with fewer bumps in a downhill course or the like, the user executes the first control until a summit is reached, whereafter when propelling the bicycle on a downward slope, the user does the switching from the first control to the second control to realize a quick propelling of the bicycle through the highly responsible assist.

In the description made above, the assisting torque is described as being calculated from the pedal torque and the average value of the pedal torque, the present teaching is not limited thereto. A configuration may be adopted in which the assisting torque is calculated based on the vehicle speed or the crank rotation speed in addition to the pedal torque and the average value of the pedal torque.

In doing the switching between the first control and the second control while the vehicle is being propelled, in case an amount of change from the current command value to the command value calculated after the switching of the controls exceeds a predetermined upper limit value, the motor control module 95 may set the command value at the upper limit value in place of the calculated command value.

By controlling the motor in the way described above, the amount of change in the command value can be suppressed, whereby the switching between the first control and the second control can be executed smoothly.

As shown in Fig. 1, an indicator 67 may be provided on the electrically assisted bicycle 1, and this indicator 67 is illuminated in different colors or different patterns in association with the motor control module 95 executing the first control or the second control. Here, the different patterns are two arbitrary patterns of patterns of turning off, turning on and flashing of the indicator 67.

As a result of the indicator 67 like this being provided, by looking at the indicator 67, the user can verify easily which of the first control and the second control is currently in execution. The illuminated state of the indicator 67 can easily be grasped by the user without watching the indicator 67. Owing to this, the provision of the indicator 67 is preferable in doing frequently the switching between the first control and the second control while the rider is propelling the vehicle on a riding path with severe ups and downs like a downhill.

In the embodiment, while the first control and the second control are configured to be sequentially switched by the user operating the operating unit 56, the switching method between the first control and the second control is not limited to the example described above.

For example, a configuration may be adopted in which the second control is executed only while the user is operating the operating unit 56 (the user is pushing a knob or gripping on a lever), whereas the first control is executed only while the user does not operate the operating unit 56.

Alternatively, a configuration may be adopted in which the first control is selected after a power supply of the vehicle is switched on, and the second control is then selected when the user operates the operating unit 56 so that the second control continues to be in selection after the operation of the operating unit 56 by the user until the user operates the operating unit 56 again.

Alternatively, a configuration may be adopted in which the control is reset when the power supply of the vehicle is switched off and the first control is selected after the power supply is switched on again. Alternatively, a configuration may be adopted in which the second control is selected even after the power supply is switched on again until the operating unit 56 is operated again even though the power supply of the vehicle is switched off.

Further, the operating unit 56 may be configured so that modes are selected by operating an electric controller via a knob or a switch or an assist selection signal is received from a mobile smartphone.

The operating unit 56 may adopt a mechanical configuration such as a lever, a toggle, a knob, a switch or the like. For example, a configuration may be adopted in which as long as a switch stays in a first control position or a second control position, the selection of the first control or the second control continues to be held whether the power supply is switched on or off.

As the electrically assisted bicycle 1 according to this embodiment, in addition to the pedal torque assisting function in which the motor control module 95 assists the rider in depressing the pedals when the rider propels the bicycle 1, the electrically assisted bicycle 1 may be equipped with a walk-push function in which the electric motor 60 is caused to output walk-push assisting torque which assists the rider in pushing the bicycle 1 when the rider push propels the bicycle 1 while walking.

In the case of the vehicle being equipped with the walk-push function like this, a walk-push operating unit which causes the walk-push assisting torque to be generated and the operating unit which selects the first control or the second control may be mounted separately from each other.

Alternatively, a configuration may be adopted in which a single operating unit is mounted, so that depressing once the operating unit selects the first control or the second control and depressing the operating unit longer generates the walk-push assisting torque.

[Description of Reference Numerals]

1: electrically assisted bicycle; 11: body frame; 12: head tube; 13: down tube; 14: seat tube; 15: top tube; 16: swing arm; 16a: chain stay; 16b: seat stay; 16c: first pivot; 17: link; 18: hydraulic shock absorber; 19: bracket; 21: front wheel (wheel); 22: rear wheel (wheel); 23: handlebar; 24: seat; 25: handlebar stem; 26: front fork; 27: axle shaft; 28: seat post; 29: rear wheel axle; 31: crank arm; 32: crank arm; 33: pedal; 34: pedal; 35: battery; 37: front wheel speed sensor (wheel speed sensor); 40: power unit; 41: crank shaft; 42: drive sprocket; 45: driven sprocket; 46: chain; 50: unit case; 51: rear derailer; 55: one-way clutch; 56: operating unit; 57: pedal torque detection unit (torque sensor); 58: crank rotation detection unit; 59: resultant force output shaft; 60: electric motor; 63: grip portion; 65: brake lever; 67: indicator; 82: speed reducer; 85: one-way clutch; 92: one-way clutch; 93: speed change controller; 94: gear sensor; 95: motor control module (control unit); 96: rear wheel speed sensor (wheel speed sensor); 97: gear estimation module; 98:

memory; 99: motor rotation sensor; 100: control apparatus; 101: pedal torque calculation module; 105: motor control module.

**Claims**

1.  An electrically assisted bicycle comprising:

    a crank shaft (41);
    pedals (33,34) adapted to rotate the crank shaft (41);
    an electric motor (60) adapted to assists a force with which a rider in depresses the pedals (33,34);
    a torque sensor (57) adapted to output a signal corresponding to pedal torque exerted on the pedals (33,34) by the rider;
    a control unit (95) which is adapted to calculate a command value which determines on the magnitude of assisting torque based on at least an output of the torque sensor (57); and
    an operating unit (56) which is adapted to be operated by the rider, wherein
    the control unit (95) is configured so as to do, in response to an operation of the operating unit (56) by the rider, the switching between:

    a first control; and
    a second control in which a time required for the assisting torque to change to meet a change in the pedal torque is shorter and the amount of change in the assisting torque to meet a change in the pedal torque is greater than in the first control, **characterized in that** P(t) is pedal torque at the current time t,
    PA1(t) is an average value of pedal torque during a span wherein t-t1,
    PA2(t) is an average value during a span wherein t-t2, $|t-t2| \leq |t-t1|$ a, b, e, f, A1 and A2 wherein a/b<e/f, are constants, and
    $\alpha$ and $\beta$ are variables wherein $0 \leq \alpha \leq 1$, $0 \leq \beta \leq 1$, $\alpha < \beta$,
    the control unit (95) is adapted to calculate a command value T1 which is calculated by the first control using the following expression 1, ), and adapted to calculate a command value
    T2 which is calculated by the second control using the following expression 2

    $$T1(t) = \{a*P(t)*\alpha + b*PA1(t)*(1-\alpha)\}*A1 \dots \qquad : \text{expression 1}$$

    and

    $$T2(t) = \{e*P(t)*\beta + f*PA2(t)*(1-\beta)\}*A2 \dots \qquad : \text{expression 2,}$$

    or
    P(t) is pedal torque at the current time t,
    QA1(t) is an average value of pedal torque during the past 1/g rotation of the crank shaft (41) at the current time t,
    QA2(t) is an average value of pedal torque during the past 1/h wherein $g \leq h$, rotation of the crank shaft (41),
    a, b, e, f, A1 and A2 wherein a/b<e/f, are constants, and
    a and $\beta$ are variables wherein $0 \leq \alpha \leq 1$, $0 \leq \beta \leq 1$, $\alpha < \beta$,
    the control unit (95) is adapted to calculate a command value T1 which is calculated by the first control using the following expression 3, and is adapted to calculate a command value
    T2 which is calculated by the second control using the following expression 4

    $$T1(t) = \{a*P(t)*\alpha + b*QA1(t)*(1-\alpha)\}*A1 \dots \qquad : \text{expression 3}$$

    and

    $$T2(t) = \{e*P(t)*\beta + f*QA2(t)*(1-\beta)\}*A2 \dots \qquad : \text{expression 4.}$$

2. An electrically assisted bicycle according to Claim 1, **characterized in that** the control unit (95) is adapted to set $\alpha$ and $\beta$ based on a crank speed c calculated from a change in pedal torque or a crank speed c calculated from an output of a crank rotation detection unit (58) adapted to detect a phase of the crank shaft (41), in such a way that $\alpha$ and $\beta$ become greater as the crank speed c becomes slower and $\alpha$ and $\beta$ become smaller as the crank speed c becomes faster.

3. An electrically assisted bicycle according to Claim 1 or 2, **characterized by** a wheel speed sensor (37,96) adapted to output a signal corresponding to a wheel speed v of a wheel (21,22) of the bicycle, wherein
   the control unit (95) is adapted to set $\alpha$ and $\beta$ based on a wheel speed v calculated from an output of the wheel speed sensor (37,96) in such a way that $\alpha$ and $\beta$ become greater as the wheel speed v becomes slower and $\alpha$ and $\beta$ become smaller as the wheel speed v becomes faster.

4. An electrically assisted bicycle according to any one of Claims 1 to 3, **characterized in that** the control unit (95) is adapted to, in doing the switching between the first control and the second control while the vehicle is being propelled, in case an amount of change from the current command value to the command value calculated after the switching of the controls exceeds a predetermined upper limit value, set the command value at the upper limit value in place of the calculated command value.

5. An electrically assisted bicycle according to any one of Claims 1 to 4, **characterized by** an indicator (67) adapted to be illuminated in different colors or different patterns in association with the control unit (95) executing the first control or the second control.

6. A method for controlling an electrically assisted bicycle having pedals (33,34) adapted to rotate a crank shaft (41) and an electric motor (60) adapted to assists a force with which a rider in depresses the pedals (33,34);
   the method comprises:

   detecting a pedal torque exerted on the pedals (33,34) by the rider;
   calculating a command value which determines on the magnitude of assisting torque based on at least the detected pedal torque exerted on the pedals (33,34) by the rider; and
   in response to an operation by the rider, switching between:

   a first control; and
   a second control in which a time required for the assisting torque to change to meet a change in the pedal torque is shorter and the amount of change in the assisting torque to meet a change in the pedal torque is greater than in the first control, **characterized in that** P(t) is pedal torque at the current time t,
   PA1(t) is an average value of pedal torque during a span wherein t-t1,
   PA2(t) is an average value during a span wherein t-t2, |t-t2|≤|t-t1|,
   a, b, e, f, A1 and A2 wherein a/b<e/f, are constants, and
   a and $\beta$ are variables wherein $0{\leq}\alpha{\leq}1$, $0{\leq}\beta{\leq}1$, $\alpha<\beta$, calculating a command value T1 which is calculated by the first control using the following expression 1, and calculating a command value T2 which is calculated by the second control using the following expression 2

$$T1(t) = \{a*P(t)*\alpha + b*PA1(t)*(1-\alpha)\}*A1 \ldots \quad \text{expression 1}$$

   and

$$T2(t) = \{e*P(t)*\beta + f*PA2(t)*(1-\beta)\}*A2 \ldots \quad \text{expression 2,}$$

   or
   P(t) is pedal torque at the current time t,
   QA1(t) is an average value of pedal torque during the past 1/g rotation of the crank shaft (41) at the current time t,
   QA2(t) is an average value of pedal torque during the past 1/h wherein g≤h, rotation of the crank shaft (41),
   a, b, e, f, A1 and A2 wherein a/b<e/f, are constants, and
   $\alpha$ and $\beta$ are variables wherein $0{\leq}\alpha{\leq}1$, $0{\leq}\beta{\leq}1$, $\alpha<\beta$, calculating a command value T1 which is calculated by the first control using the following expression 3, and calculating a command value T2 which is calculated by the second control using the following expression 4

$$T1(t) = \{a*P(t)*\alpha + b*QA1(t)*(1-\alpha)\}*A1 \dots \qquad \text{expression 3}$$

and

$$T2(t) = \{e*P(t)*\beta + f*QA2(t)*(1-\beta)\}*A2 \dots \qquad \text{expression 4.}$$

7. A method for controlling an electrically assisted bicycle according to Claim 6, **characterized by**:
setting $\alpha$ and $\beta$ based on a crank speed c calculated from a change in pedal torque or a crank speed c in such a way that $\alpha$ and $\beta$ become greater as the crank speed c becomes slower and $\alpha$ and $\beta$ become smaller as the crank speed c becomes faster.

8. A method for controlling an electrically assisted bicycle according to Claim 6 or 7, **characterized by:**

detecting a wheel speed of a wheel (21,22) of the bicycle,
setting $\alpha$ and $\beta$ based on a wheel speed v in such a way that $\alpha$ and $\beta$ become greater as the wheel speed v becomes slower and $\alpha$ and $\beta$ become smaller as the wheel speed v becomes faster.

9. A method for controlling an electrically assisted bicycle according to any one of Claims 6 to 8, **characterized in that,** in doing the switching between the first control and the second control while the vehicle is being propelled, in case an amount of change from the current command value to the command value calculated after the switching of the controls exceeds a predetermined upper limit value, setting the command value at the upper limit value in place of the calculated command value.

10. A method for controlling an electrically assisted bicycle according to any one of Claims 6 to 9, **characterized in that:**
illuminating an indicator (67) in different colors or different patterns in association with executing the first control or the second control.

**Patentansprüche**

1. Ein elektrisch-unterstütztes Fahrrad, das umfasst:

eine Kurbel-Welle (41);
Pedale (33, 34), die angepasst sind, um die Kurbel-Welle (41) zu drehen;
einen Elektro-Motor (60), der angepasst ist, um eine Kraft, mit der ein Fahrer in die Pedale (33, 34) drückt, zu unterstützen;
einen Moment-Sensor (57), der angepasst ist, um ein Signal entsprechend zu einem Pedal-Moment, ausgeübt auf die Pedale (33, 34) durch den Fahrer, auszugeben;
eine Steuer-Einheit (95), die angepasst ist, um einen Befehls-Wert zu berechnen, der auf der Größe von Unterstützungs-Moment, auf Grundlage von zumindest eines Ausgangs von dem Moment-Sensor (57), bestimmt; und
eine Betätigungs-Einheit (56), die angepasst ist, um durch den Fahrer betätigt zu werden, wobei
die Steuer-Einheit (95) konfiguriert ist, sodass, in Erwiderung auf eine Betätigung von der Betätigungs-Einheit (56) durch den Fahrer, die Schaltung durchführt, zwischen:

einer ersten Steuerung; und
einer zweiten Steuerung, in der eine Zeit, gefordert dafür, dass das Unterstützungs-Moment sich ändert, um eine Änderung in der Pedal-Kraft zu treffen, kürzer ist, und
der Betrag der Änderung in dem Unterstützungs-Moment, um eine Änderung in dem Pedal-Moment zu treffen, größer ist als in der ersten Steuerung, **dadurch gekennzeichnet, dass**
P(t) ein Pedal-Moment zu einer momentanen Zeit t ist,
PA1(t) ist ein Mittel-Wert von dem Pedal-Moment während einer Zeitspanne ist,

wobei t-t1,

PA2(t) ist ein Mittel-Wert während einer Zeitspanne ist, wobei t-t2, |t-t2| ≤ |t-t1|, a, b, e, f, A1 und A2, wobei a/b < e/f Konstanten sind, und

α und β Variablen sind, wobei 0 ≤ α ≤ 1, 0 ≤ β ≤ 1, α < β,

die Steuer-Einheit (95) angepasst ist, um einen Steuer-Wert T1 zu berechnen, der durch die erste Steuerung berechnet ist, unter Verwendung des folgenden Ausdrucks 1, und angepasst ist, um einen Befehls-Wert T2 zu berechnen, der durch die zweite Steuerung unter Verwendung des folgenden Ausdrucks 2 berechnet ist

$$T1(t) = \{a*P(t)*\alpha + b*PA1(t)*(1-\alpha)\}*A1 \ldots \quad :\text{Ausdruck 1}$$

und

$$T2(t) = \{e*P(t)*\beta + f*PA2(t)*(1-\beta)\}*A2 \ldots \quad :\text{Ausdruck 2,}$$

oder

P(t) ist ein Pedal-Moment zum momentanen Zeitpunkt t,

QA1(t) ist ein Mittel-Wert von einem Pedal-Moment während der letzten 1/g-Drehung von der Kurbel-Welle (41) zum momentanen Zeitpunkt t,

QA2(t) ist ein Mittel-Wert von einem Pedal-Moment während der Vergangenheit 1/h,

wobei g ≤ H Drehung von der Kurbel-Welle (41) ist,

a, b, e, f, A1 und A2, wobei a/b < e/f Konstanten sind, und

α und β Variablen sind, wobei 0 ≤ α ≤ 1, 0 ≤ β ≤ 1, α < β,

die Steuer-Einheit (95) angepasst ist, um einen Befehls-Wert T1 zu berechnen, der durch die erste Steuerung unter Verwendung des folgenden Ausdrucks 3 berechnet ist, und angepasst ist, um einen Befehls-Wert T2 zu berechnen, der durch die zweite Steuerung unter Verwendung des folgenden Ausdrucks 4 berechnet ist

$$T1(t) = \{a*P(t)*\alpha + b*QA1(t)*(1-\alpha)\}*A1 \ldots \quad :\text{Ausdruck 3}$$

und

$$T2(t) = \{e*P(t)*\beta + f*QA2(t)*(1-\beta)\}*A2 \ldots \quad :\text{Ausdruck 4.}$$

2. Ein elektrisch-unterstütztes Fahrrad gemäß zu Anspruch 1, **dadurch gekennzeichnet, dass** die Steuer-Einheit (95) angepasst ist, um α und β zu setzen auf Grundlage von einer Kurbel-Geschwindigkeit c, berechnet aus einer Änderung in dem Pedal-Moment, oder einer Kurbel-Geschwindigkeit c, berechnet von einer Ausgabe von einer Kurbel-Dreh-Erfassungs-Einheit (58), die angepasst ist, um eine Phase von der Kurbel-Welle (41) zu erfassen, in so einer Weise, dass α und β größer werden, wenn die Kurbel-Geschwindigkeit c langsamer wird, und α und β kleiner werden, wenn die Kurbel-Geschwindigkeit c schneller wird.

3. Ein elektrisch-unterstütztes Fahrrad gemäß zu Anspruch 1 oder 2, **gekennzeichnet durch** einen Rad-Geschwindigkeits-Sensor (37, 96), der angepasst ist, um ein Signal entsprechend zu einer Rad-Geschwindigkeit v von einem Rad (21, 22) von dem Fahrrad auszugeben, wobei

die Steuer-Einheit (95) angepasst ist, um α und β zu setzen auf Grundlage einer Rad-Geschwindigkeit v, berechnet von einer Ausgabe von dem Rad-Geschwindigkeits-Sensor (37, 96) in so einer Weise, dass α und β größer werden, wenn die Rad-Geschwindigkeit v langsamer wird, und α und β kleiner werden, wenn die Rad-Geschwindigkeit v schneller wird.

4. Ein elektrisch-unterstütztes Fahrrad gemäß zu irgendeinem der Ansprüche 1 bis 3, **dadurch gekennzeichnet, dass** die Steuer-Einheit (95) angepasst ist, um, indem die Schaltung zwischen der ersten Steuerung und der zweiten Steuerung durchgeführt wird, während das Fahrzeug angetrieben wird, in einem Fall, indem ein Betrag der Änderung von dem momentanen Befehls-Wert zu dem Befehls-Wert, berechnet nach dem Schalten der Steuerungen, einen vorgegebenen oberen Grenzwert überschreitet, den Befehls-Werts auf den oberen Grenzwert anstelle des berechneten Befehls-Werts zu setzen.

5. Ein elektrisch-unterstütztes Fahrrad gemäß zu irgendeinem der Ansprüche 1 bis 4, **gekennzeichnet durch** einen Indikator (67), der angepasst ist, um in unterschiedlichen Farben oder unterschiedlichen Mustern zu leuchten, in Zuordnung mit der Steuer-Einheit (95), welche die erste Steuerung oder die zweite Steuerung ausführt.

6. Ein Verfahren zur Steuerung eines elektrisch-unterstützten Fahrrads, das Pedale (33, 34), die angepasst sind, um ein Kurbel-Welle (41) zu drehen, einen Elektro-Motor (60), der angepasst ist, um eine Kraft, mit der ein Fahrer in die Pedale (33, 34) drückt, zu unterstützen, hat
das Verfahren weist auf:

Erfassen eines Pedal-Moments, ausgeübt auf die Pedale (33, 34) durch den Fahrer;
Berechnen eines Befehls-Werts, der auf der Größe von Unterstützungs-Moment, auf Grundlage von zumindest eines Pedal-Moments, ausgeübt auf die Pedale (33, 34) durch den Fahrer; und in Erwiderung auf eine Betätigung durch den Fahrer, Schalten zwischen:

einer ersten Steuerung; und
einer zweiten Steuerung, in der eine Zeit, gefordert dafür, dass das Unterstützungs-Moment sich ändert, um eine Änderung in der Pedal-Kraft zu treffen, kürzer ist, und der Betrag der Änderung in dem Unterstützungs-Moment, um eine Änderung in dem Pedal-Moment zu treffen, größer ist als in der ersten Steuerung, **dadurch gekennzeichnet, dass**
$P(t)$ ein Pedal-Moment zu einer momentanen Zeit $t$ ist,
$PA1(t)$ ist ein Mittel-Wert von dem Pedal-Moment während einer Zeitspanne ist, wobei $t-t1$,
$PA2(t)$ ist ein Mittel-Wert während einer Zeitspanne ist, wobei $t-t2$, $|t-t2| \leq |t-t1|$, $a$, $b$, $e$, $f$, $A1$ und $A2$, wobei $a/b < e/f$ Konstanten sind, und
$\alpha$ und $\beta$ Variablen sind, wobei $0 \leq \alpha \leq 1$, $0 \leq \beta \leq 1$, $\alpha < \beta$,
die Steuer-Einheit (95) angepasst ist, um einen Steuer-Wert $T1$ zu berechnen, der durch die erste Steuerung berechnet ist, unter Verwendung des folgenden Ausdrucks 1, und angepasst ist, um einen Befehls-Wert $T2$ zu berechnen, der durch die zweite Steuerung unter Verwendung des folgenden Ausdrucks 2 berechnet ist

$$T1(t) = \{a*P(t)*\alpha + b*PA1(t)*(1-\alpha)\}*A1 \ldots \qquad \text{:Ausdruck 1}$$

und

$$T2(t) = \{e*P(t)*\beta + f*PA2(t)*(1-\beta)\}*A2 \ldots \qquad \text{:Ausdruck 2,}$$

oder
$P(t)$ ist ein Pedal-Moment zum momentanen Zeitpunkt $t$,
$QA1(t)$ ist ein Mittel-Wert von einem Pedal-Moment während der letzten $1/g$-Drehung von der Kurbel-Welle (41) zum momentanen Zeitpunkt $t$,
$QA2(t)$ ist ein Mittel-Wert von einem Pedal-Moment während der Vergangenheit $1/h$, wobei $g \leq H$ Drehung von der Kurbel-Welle (41) ist,
$a$, $b$, $e$, $f$, $A1$ und $A2$, wobei $a/b < e/f$ Konstanten sind, und
$\alpha$ und $\beta$ Variablen sind, wobei $0 \leq \alpha \leq 1$, $0 \leq \beta \leq 1$, $\alpha < \beta$,
die Steuer-Einheit (95) angepasst ist, um einen Befehls-Wert $T1$ zu berechnen, der durch die erste Steuerung unter Verwendung des folgenden Ausdrucks 3 berechnet ist, und angepasst ist, um einen Befehls-Wert $T2$ zu berechnen, der durch die zweite Steuerung unter Verwendung des folgenden Ausdrucks 4 berechnet ist

$$T1(t) = \{a*P(t)*\alpha + b*QA1(t)*(1-\alpha)\}*A1 \ldots \qquad \text{:Ausdruck 3}$$

und

$$T2(t) = \{e*P(t)*\beta + f*QA2(t)*(1-\beta)\}*A2 \ldots \qquad :\text{Ausdruck 4.}$$

**7.** Ein Verfahren zur Steuerung eines elektrisch-unterstützten Fahrrads gemäß zu Anspruch 6, **gekennzeichnet durch:** Setzen von α und β auf Grundlage von einer Kurbel-Geschwindigkeit c, berechnet aus einer Änderung in dem Pedal-Moment, oder einer Kurbel-Geschwindigkeit c, in so einer Weise, dass α und β größer werden, wenn die Kurbel-Geschwindigkeit c langsamer wird, und α und β kleiner werden, wenn die Kurbel-Geschwindigkeit c schneller wird.

**8.** Ein Verfahren zur Steuerung eines elektrisch-unterstützten Fahrrads gemäß zu Anspruch 6 oder 7, **gekennzeichnet durch:**

Erfassen einer Rad-Geschwindigkeit von einem Rad (21, 22) von dem Fahrrad,
Setzen von α und β auf Grundlage einer Rad-Geschwindigkeit v in so einer Weise,
dass α und β größer werden, wenn die Rad-Geschwindigkeit v langsamer wird, und α und β kleiner werden,
wenn die Rad-Geschwindigkeit v schneller wird.

**9.** Ein Verfahren zur Steuerung eines elektrisch-unterstützten Fahrrads gemäß zu irgendeinem der Ansprüche 6 bis 8, **dadurch gekennzeichnet, dass** indem die Schaltung zwischen der ersten Steuerung und der zweiten Steuerung durchgeführt wird, während das Fahrzeug angetrieben wird, in einem Fall, indem ein Betrag der Änderung von dem momentanen Befehls-Wert zu dem Befehls-Wert, berechnet nach dem Schalten der Steuerungen, einen vorgegebenen oberen Grenzwert überschreitet, Setzen des Befehls-Werts auf den oberen Grenzwert anstelle des berechneten Befehls-Werts.

**10.** Ein Verfahren zur Steuerung eines elektrisch-unterstützten Fahrrads gemäß zu irgendeinem der Ansprüche 6 bis 9, **dadurch gekennzeichnet, dass:**
Leuchten eines Indikator (67) in unterschiedlichen Farben oder unterschiedlichen Mustern, in Zuordnung mit der Ausführung der ersten Steuerung oder der zweiten Steuerung.

**Revendications**

**1.** Bicyclette à assistance électrique comprenant :

un arbre manivelle (41),
des pédales (33, 34) conçues pour faire tourner l'arbre manivelle (41),
un moteur électrique (60) conçu pour fournir une assistance à la force avec laquelle un cycliste appuie sur les pédales (33, 34),
un capteur de couple (57) conçu pour délivrer un signal correspondant au couple de pédalage exercé sur les pédales (33, 34) par le cycliste,
une unité de commande (95) qui est conçue pour calculer une valeur de consigne qui détermine l'amplitude du couple d'assistance sur la base d'au moins la sortie du capteur de couple (57), et
une unité d'exploitation (56) qui est conçue pour être manœuvrée par le cycliste, où
l'unité de commande (95) est configurée pour réaliser, en réponse à une manœuvre de l'unité d'exploitation (56) par le cycliste, le basculement entre :

une première commande, et
une seconde commande dans laquelle le temps requis pour que le couple d'assistance change, pour satisfaire une modification du couple de pédalage, est plus court, et dans laquelle l'amplitude de changement du couple d'assistance, pour répondre à une modification du couple de pédalage, est plus grande que dans la première commande, **caractérisée en ce que :**

P(t) représente le couple de pédalage à l'instant t courant,
PA1(t) représente la valeur moyenne du couple de pédalage pendant un intervalle dans lequel t-t1,
PA2(t) représente une valeur moyenne pendant un intervalle dans lequel t-t2, avec $|t-t2| \leq |t-t1|$,
a, b, e, f, A1 et A2 sont des constantes où a / b < e / f, et
α et β sont des variables où $0 \leq \alpha \leq 1$, $0 < \beta \leq 1$, $\alpha < \beta$,
l'unité de commande (95) est conçue pour calculer une valeur de consigne T1 qui est calculée par la première commande en utilisant l'expression 1 qui suit, et elle est conçue pour calculer une valeur de consigne T2 qui est calculée par la seconde commande en utilisant l'expression 2 qui suit :

```
T1(t) = {a * P(t) * α + b * PA1(t) * (1 - α)} * A1    ..
expression 1,
```

```
et
```

```
T2(t) = {e * P(t) * β + f * PA2(t) * (1 - β)} * A2
expression 2,
```

ou bien P(t) représente le couple de pédalage à l'instant courant,
QA1(t) représente la valeur moyenne du couple de pédalage pendant la dernière rotation 1 / g de l'arbre manivelle (41) à l'instant t courant,
QA2(t) représente la valeur moyenne du couple de pédalage pendant la dernière rotation 1 / h de l'arbre manivelle (41), où $g \leq h$,
a, b, e, f, A1 et A2 sont des constantes où a / b < e / f, et
$\alpha$ et $\beta$ sont des variables où $0 \leq \alpha \leq 1$, $0 \leq \beta \leq 1$, $\alpha < \beta$,
l'unité de commande (95) est conçue pour calculer une valeur de consigne T1 qui est calculée par la première commande en utilisant l'expression 3 qui suit, et elle est conçue pour calculer une valeur de consigne T2 qui est calculée par la seconde commande en utilisant l'expression 4 qui suit :

```
T1(t) = {a * P(t) * α + b * QA1(t) * (1 - α)} * A1    ..
expression 3,
```

```
et
```

```
T2(t) = {e * P(t) * β + f * QA2(t) * (1 - β)} * A2
expression 4.
```

2. Bicyclette à assistance électrique selon la revendication 1, **caractérisée en ce que** l'unité de commande (95) est conçue pour fixer $\alpha$ et $\beta$ sur la base de la vitesse c de manivelle calculée à partir d'une modification de couple de pédalage ou de la vitesse c de manivelle calculée à partir de la sortie de l'unité de détection de rotation de manivelle (58) conçue pour détecter la phase de l'arbre manivelle (41) de manière à ce que $\alpha$ et $\beta$ augmentent à mesure que la vitesse c de manivelle diminue, et à ce que $\alpha$ et $\beta$ diminuent à mesure que la vitesse c de manivelle augmente.

3. Bicyclette à assistance électrique selon la revendication 1 ou la revendication 2, **caractérisée par** un capteur de vitesse de roue (37, 96) conçu pour délivrer un signal correspondant à la vitesse v d'une roue (21, 22) de la bicyclette, où
l'unité de commande (95) est conçue pour fixer $\alpha$ et $\beta$ sur la base de la vitesse v de roue calculée à partir de la sortie du capteur de vitesse de roue (37, 96) de manière à ce que $\alpha$ et $\beta$ augmentent à mesure que la vitesse v de roue diminue, et à ce que $\alpha$ et $\beta$ diminuent à mesure que la vitesse v de roue augmente.

4. Bicyclette à assistance électrique selon l'une quelconque des revendications 1 à 3, **caractérisée en ce que** l'unité de commande (95) est conçue pour fixer la valeur de consigne à la valeur limite supérieure au lieu de la valeur de consigne calculée, lors du basculement entre la première commande et la seconde commande alors que le véhicule est propulsé, dans le cas où l'amplitude de changement de la valeur de consigne courante, jusqu'à la valeur de consigne calculée après le basculement des commandes, dépasse une valeur limite supérieure prédéterminée.

5. Bicyclette à assistance électrique selon l'une quelconque des revendications 1 à 4, **caractérisée par** un indicateur (67) conçu pour être éclairé dans différentes couleurs ou avec différents motifs en association avec l'exécution par l'unité de commande (95) de la première commande ou de la seconde commande.

6. Procédé de commande d'une bicyclette à assistance électrique comportant des pédales (33, 34) conçues pour faire tourner un arbre manivelle (41) et un moteur électrique (60) conçu pour fournir une assistance à la force avec laquelle un cycliste appuie sur les pédales (33, 34),
le procédé comprenant :

la détection du couple de pédalage exercé sur les pédales (33, 34) par le cycliste,
le calcul d'une valeur de consigne qui détermine l'amplitude du couple d'assistance sur la base d'au moins le couple de pédalage détecté exercé sur les pédales (33, 34) par le cycliste, et
en réponse à une manœuvre par le cycliste, le basculement entre :

une première commande, et
une seconde commande dans laquelle le temps requis pour que le couple d'assistance change, pour satisfaire une modification du couple de pédalage, est plus court, et dans laquelle l'amplitude de changement du couple d'assistance, pour répondre à une modification du couple de pédalage, est plus grande que dans la première commande, **caractérisé en ce que :**

P(t) représente le couple de pédalage à l'instant t courant,
PA1(t) représente la valeur moyenne du couple de pédalage pendant un intervalle dans lequel t-t1,
PA2(t) représente une valeur moyenne pendant un intervalle dans lequel t-t2, avec $|t\text{-}t2| \leq |t\text{-}t1|$,
a, b, e, f, A1 et A2 sont des constantes où a / b < e / f, et
$\alpha$ et $\beta$ sont des variables où $0 \leq \alpha \leq 1$, $0 \leq \beta \leq 1$, $\alpha < \beta$,
le calcul d'une valeur de consigne T1 qui est calculée par la première commande en utilisant l'expression 1 qui suit, et le calcul d'une valeur de consigne T2 qui est calculée par la seconde commande en utilisant l'expression 2 qui suit :

```
T1(t) = {a * P(t) * α + b * PA1(t) * (1 - α)} * A1    ...
expression 1,
```

et

```
T2(t) = {e * P(t) * β + f * PA2(t) * (1 - β)} * A2    ...
expression 2,
```

ou bien
P(t) représente le couple de pédalage à l'instant courant,
QA1(t) représente la valeur moyenne du couple de pédalage pendant la dernière rotation 1 / g de l'arbre manivelle (41) à l'instant t courant,
QA2(t) représente la valeur moyenne du couple de pédalage pendant la dernière rotation 1 / h de l'arbre manivelle (41), où $g \leq h$,
a, b, e, f, A1 et A2 sont des constantes où a / b < e / f, et
$\alpha$ et $\beta$ sont des variables où $0 \leq \alpha \leq 1$, $0 \leq \beta \leq 1$, $\alpha < \beta$,
le calcul d'une valeur de consigne T1 qui est calculée par la première commande en utilisant l'expression 3 qui suit, et le calcul d'une valeur de consigne T2 qui est calculée par la seconde commande en utilisant l'expression 4 qui suit :

```
T1(t) = {a * P(t) * α + b * QA1(t) * (1 - α)} * A1    ...
expression 3,
```

et

```
T2(t) = {e * P(t) * β + f * QA2(t) * (1 - β)} * A2    ...
expression 4.
```

7. Procédé de commande d'une bicyclette à assistance électrique selon la revendication 6, **caractérisé par :**

le réglage de $\alpha$ et $\beta$ sur la base de la vitesse c de manivelle calculée à partir d'une modification de couple de pédalage ou de la vitesse c de manivelle calculée à partir de la sortie de l'unité de détection de rotation de manivelle (58) conçue pour détecter la phase de l'arbre manivelle (41) de manière à ce que $\alpha$ et $\beta$ augmentent à mesure que la vitesse c de manivelle diminue, et à ce que $\alpha$ et $\beta$ diminuent à mesure que la vitesse c de manivelle augmente.

8. Procédé de commande d'une bicyclette à assistance électrique selon la revendication 6 ou la revendication 7, **caractérisé par :**

   la détection de la vitesse v d'une roue (21, 22) de la bicyclette,
   le réglage de $\alpha$ et $\beta$ sur la base de la vitesse v de roue calculée à partir de la sortie du capteur de vitesse de roue (37, 96) de manière à ce que $\alpha$ et $\beta$ augmentent à mesure que la vitesse v de roue diminue, et à ce que $\alpha$ et $\beta$ diminuent à mesure que la vitesse v de roue augmente.

9. Procédé de commande d'une bicyclette à assistance électrique selon l'une quelconque des revendications 6 à 8, **caractérisé par,**
   le réglage de la valeur de consigne à la valeur limite supérieure au lieu de la valeur de consigne calculée, lors du basculement entre la première commande et la seconde commande alors que le véhicule est propulsé, dans le cas où l'amplitude de changement de la valeur de consigne courante, jusqu'à la valeur de consigne calculée après le basculement des commandes, dépasse une valeur limite supérieure prédéterminée.

10. Procédé de commande d'une bicyclette à assistance électrique selon l'une quelconque des revendications 6 à 9, **caractérisé par :**
    l'éclairage d'un indicateur (67) dans différentes couleurs ou avec différents motifs en association avec l'exécution de la première commande ou de la seconde commande.

*FIG. 1*

EP 3 176 065 B1

# FIG. 2

MAN-POWERED DRIVING FORCE — 41

CRANK SHAFT — 41

ONE-WAY CLUTCH — 55

PEDAL TORQUE DETECTION UNIT — 57

CRANK ROTATION DETECTION UNIT — 58

OPERATING UNIT — 56

CONTROL APPARATUS — 100

PEDAL TORQUE CALCULATION MODULE — 101

FRONT WHEEL SPEED SENSOR — 37

FRONT WHEEL — 21

MOTOR CONTROL MODULE — 95

GEAR ESTIMATION MODULE — 97

REAR WHEEL SPEED SENSOR — 96

MEMORY — 98

MOTOR DRIVE MODULE — 105

GEAR SENSOR — 94

SPEED CHANGE CONTROLLER — 93

ELECTRIC MOTOR — 60

MOTOR ROTATION SENSOR (ENCODER) — 99

ASSISTING DRIVING FORCE

SPEED REDUCER — 82

ONE-WAY CLUTCH — 85

RESULTANT FORCE OUTPUT SHAFT — 59

RESULTANT POWER TRANSMISSION LINE (CHAIN) — 46

REAR DERAILER — 51

DRIVEN SPROCKET — 45

ONE-WAY CLUTCH — 92

REAR WHEEL — 22

EP 3 176 065 B1

## FIG. 3

```
                    ○
                          POWER
                          SUPPLY ON

                              Step1
                    ┌──────────────┐
                    │    FIRST      │
                    │   CONTROL     │
                    └──────────────┘

OPERATION OF                  Step2          OPERATION OF
OPERATION UNIT                               OPERATION UNIT
                    ┌──────────────┐
                    │   SECOND      │
                    │   CONTROL     │
                    └──────────────┘
```

# FIG. 4

OPERATION UNIT — 56

- PEDAL TORQUE P(t)
- AVERAGE VALUE PA(t) OF PEDAL TORQUE
- CRANK SPEED c
- VEHICLE SPEED v
- ..

FIRST CONTROL

SECOND CONTROL

CALCULATION OF A COMMAND VALUE CORRESPONDING TO ASSISTING — 95

TORQUE

ASSISTING TORQUE

PEDAL TORQUE

TIME

TORQUE

ASSISTING TORQUE

PEDAL TORQUE

TIME

EP 3 176 065 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2657118 A1

- JP 2001122184 A